Europäisches Patentamt

European Patent Office

Office européen des brevets

(11) Numéro de publication : **0 380 731 B1**

# (12) FASCICULE DE BREVET EUROPEEN

(45) Date de publication du fascicule du brevet :
**06.05.92 Bulletin 92/19**

(21) Numéro de dépôt : **89101855.8**

(22) Date de dépôt : **03.02.89**

(51) Int. Cl.⁵ : **A23J 3/00**, A23L 1/227

(54) **Procédé de fabrication d'un condiment.**

(43) Date de publication de la demande :
**08.08.90 Bulletin 90/32**

(45) Mention de la délivrance du brevet :
**06.05.92 Bulletin 92/19**

(84) Etats contractants désignés :
**AT BE CH DE ES FR GB GR IT LI LU NL SE**

(56) Documents cités :
**EP-A- 0 226 769**
**WO-A-87/03174**
**DE-A- 1 517 110**
**US-A- 3 770 452**

(56) Documents cités :
**CHEMICAL ABSTRACTS, vol. 90, no. 5, janvier 1979, page 396, résumé no. 37808d, Columbus, Ohio, US; G. LALASIDIS: "Four newmethods of debittering protein hydrolyzates and a fraction of hydrolyzates with high content of essential amino acids", & ANN.NUTR. ALIMENT. 1978, 32(2-3), 709-23**
**CHEMICAL ABSTRACTS, vol. 78, no. 9, 5 mars 1973, page 392, résumé no. 56742w, Columbus, Ohio, US; & SU-A-355 219 (S.D.SHESTAKOV) 16-10-1972**

(73) Titulaire : **SOCIETE DES PRODUITS NESTLE S.A.**
**Case postale 353**
**CH-1800 Vevey (CH)**

(72) Inventeur : **Hirsbrunner, Pierre**
**El Cantero Chemin des Romains**
**CH-1801 Les Monts-de-Corsier (CH)**
Inventeur : **Weymuth, Hans**
**Avenue de la Cressire 7**
**CH-1814 La Tour-de-Peilz (CH)**

**Description**

La présente invention concerne un procédé de fabrication d'un condiment, dans lequel on hydrolyse des protéines végétales à l'acide chlorhydrique concentré, on neutralise l'hydrolysat, on en sépare les premiers insolubles, on laisse reposer et on en sépare les seconds insolubles.

On a constaté récemment dans la préparation d'hydrolysats de protéines qu'une quantité non négligeable de chlorhydrines y était présente. Dès lors, il apparaissait très souhaitable, sur le plan industriel, de trouver une méthode d'élimination de ces chlorohydrines. La demande de brevet EP 226 769 concerne déjà un procédé d'élimination de ces chlorhydrines, à savoir les dichloropropanediols (DCP). Ce terme recouvre deux isomères, à savoir le 1,3-dichloro-2-propanol et le 2-3-dichloro-1-propanol. Le procédé précité est basé sur une méthode d'élimination des DCP par entrainement à la vapeur sous pression réduite.

Le but de la présente invention est un autre procédé d'extraction de chlorhydrines des hydrolysats de protéines. Par chlorhydrines, on entend aussi bien les DCP que les monochloropropanediols (MCP), à savoir le 3-chloro-1,2-propanediol et le 2-chloro-1-3-propanediol. Le premier isomère est présent dans l'hydrolysat à une teneur d'environ 10 fois plus élevée que le second.

Le but de la présente invention est de mettre au point un procédé d'extraction simple et efficace, dans lequel on ne modifie pas le procédé de base d'obtention desdits hydrolysats, dans lequel on arrive à un produit final identique à celui actuellement sur le marché, c'est-à-dire un produit ayant les mêmes qualités organoleptiques. Pour ce faire, le procédé selon l'invention ne met en oeuvre aucune réaction chimique lors de l'extraction des MCP et DCP.

Selon le procédé de l'invention, on soumet, après la séparation des premiers ou seconds insolubles, l'hydrolysat à une extraction liquide/liquide à contre-courant avec un solvant choisi dans le groupe constitué par l'acétate d'éthyle, le butanol-1, le butanol-2, l'isobutanol et la méthyléthylcétone, de façon à en éliminer les MCP et les DCP, ensuite à un entrainement à la vapeur pour en éliminer le solvant résiduel. Finalement, l'hydrolysat est soumis à une concentration pour éliminer l'eau résiduelle.

Le choix du solvant a été dicté par l'obligation d'utiliser un produit admis par les législations sur les denrées alimentaires, immiscible à l'eau, ayant une bonne affinité pour les MCP et qui soit régénérable, ceci pour des raisons économiques. Les solvants précités satisfont à ces quatre conditions.

Le procédé selon l'invention peut être mis en oeuvre par charges, en continu ou en semi-continu sur tout type d'extracteur liquide/liquide connu dans la technique. On utilise notamment des colonnes par gravité, des colonnes pulsées, des colonnes avec plateaux tournants ou des colonnes Karr. L'emploi d'un mélangeur-séparateur ou d'un extracteur-centrifuge peut également être envisagé.

Pour mettre en oeuvre le présent procédé, on utilise comme matière première des sources de protéines végétales d'origines variées. On peut utiliser par exemple des tourteaux de graines d'oléagineuses, du gluten de céréales ou de la farine de soja dégraissée.

Pour l'hydrolyse, on utilise de l'acide chlorhydrique concentré. On utilise par exemple un acide chlorhydrique 4N - 8N, de préférence 6N, qui présente donc une concentration de environ 15-25%, de préférence entre 18 et 20% en poids. On réalise l'hydrolyse dans des cuves émaillées en brassant lentement la matière première dans l'acide à une température de 70 - 120°C durant plusieurs heures, par exemple 6 - 13 h. On obtient généralement à ce premier stade un hydrolysat de couleur sombre contenant une forte proportion de substances insolubles dites humiques, appelées les premiers insolubles dans le présent exposé. On neutralise l'hydrolysat avec une base concentrée, de préférence du carbonate de sodium sous forme sèche ou pâteuse, jusqu'à un pH de environ 5,0 - 6,0. On filtre ensuite l'hydrolysat neutralisé de manière à en éliminer lesdits premiers insolubles. On soumet l'hydrolysat à ladite extraction à contre-courant à ce deuxième stade ou après l'avoir laissé reposer. On peut laisser reposer l'hydrolysat plus ou moins longtemps, de quelques jours à quelques semaines par exemple selon l'usage auquel on le destine, de manière à permettre la séparation de substances cristallisant lentement et de particules colloïdales s'agglomérant lentement appelées les seconds insolubles dans le présent exposé. On peut séparer lesdits seconds insolubles par filtration. On peut enfin soumettre l'hydrolysat à l'extraction à contre-courant à ce troisième stade si on ne l'a pas fait après la séparation desdits premiers insolubles. On obtient un hydrolysat liquide de couleur sombre dont la qualité est considérée comme d'autant meilleure que sa densité est grande. C'est ainsi que l'on réalise de préférence les étapes ci-dessus du procédé de manière à obtenir une densité de l'hydrolysat comprise entre 1,250 et 1,265 g/cm³.

La teneur en MCP dans l'hydrolysat est fonction du procédé pour sa préparation. Elle est normalement comprise entre 50 et 300 ppm. Celle de DCP est comprise entre 5 et 20 ppm.

La méthode d'analyse retenue pour déterminer la teneur en DCP, autrement dit la concentration des DCP dans le condiment, est la même que celle mentionnée dans la demande de brevet précitée EP 226 769.

La méthode d'analyse des MCP, analogue à celle des DCP, est exposée ci-dessous.

La hauteur de la colonne utilisée pour l'extraction est fonction de la teneur au départ en MCP et de la

teneur finale tolérée. Si on utilise une colonne pulsée, elle est comprise entre 6 et 20 m avec environ 15 à 20 plateaux théoriques. Dans des procédés industriels, on travaille à un débit compris entre 500 et 1'500 l. par heure d'hydrolysat.

Après l'extraction au solvant, il reste dans l'hydrolysat 1-2 pourcents du solvant utilisé. Cette quantité a un effet négatif sur le goût, de sorte qu'il est absolument indispensable de l'éliminer. On effectue cette extraction par entrainement à la vapeur, par exemple avec une colonne telle que décrite dans le brevet EP 226 769, et dans les mêmes conditions opératoires.

Cet entrainement à la vapeur introduisant de l'eau dans l'hydrolysat, il faut alors chasser cette eau pour obtenir un produit plus proche de celui de départ avec environ 50% de matière sèche. Cette concentration se fait de manière classique, par exemple sous vide dans un évaporateur.

Après l'extraction au solvant, la distillation à la vapeur, la concentration de l'hydrolysat et une standardisation du pH par adjonction d'acide chlorhydrique de manière à arriver à un pH compris entre 5,2 et 5,8 de préférence de l'ordre de 5,4, l'hydrolysat final a une teneur en matières sèches comprise entre 46 et 50%, contient moins de 500 ppb de MCP et il est libre de DCP.

Le procédé selon l'invention permet d'extraire de l'hydrolysat les deux isomères MCP.

Pour l'extraction au solvant, on travaille avec un rapport en volume hydrolysat/solvant compris entre 1:0,5 et 1:2. Si on introduit trop peu de solvant, l'extraction des MCP est insuffisante et si on en introduit trop, on obtient une trop grande quantité de solvant à purifier, ce qui est industriellement inacceptable.

L'extraction à contre-courant se fait normalement à la pression atmosphérique et à une température comprise entre 15 et 30°C, de préférence à température ambiante. Le solvant préféré dans le procédé selon l'invention est le butanol-1. Il a une bonne affinité pour les MCP, un bon comportement technologique et il est facilement utilisable sur le plan industriel. Dans ce cas, on opère avec un rapport en volume hydrolysat/solvant de l'ordre de 1:1.

Pour que le procédé selon l'invention soit économiquement intéressant, on purifie le solvant utilisé par distillation, par entrainement à la vapeur d'eau ou par amminolyse et on le réutilise pour une nouvelle extraction. Sur le plan industriel, c'est le purification par entrainement à la vapeur qui est la plus intéressante. On arrive ainsi à obtenir un solvant pratiquement libre de MCP.

La suite de la description est faite en relation avec un exemple de mise en oeuvre du procédé selon l'invention, précédé d'une description de la méthode pour déterminer la teneur en MCP des présents hydrolysats. Les pourcentages et parties y sont données en poids sauf indication contraire.

Méthode de détermination de la teneur en MCP

Principe:

La présente méthode consiste en une adsorption du produit à analyser sur une colonne, une élution du MCP avec de l'acétate d'éthyle et une analyse quantitative par chromatographie en phase gazeuse sur colonne capillaire et détection par capture d'électrons.

Réactifs:

1. Eluant: Acétate d'éthyle.
2. Solution à 4 ug/ml de trichlorobenzène dans l'éluat.
3. Solutions mixtes standards à concentration identiques de 0,1 ug/ml de trichlorobenzène mais à concentrations échelonnées de 0,125; 0,25; 0,5 et 1 ug/ml de MCP dans l'éluat.
4. Solution à 20% de NaCl dans l'eau distillée.

Appareillage

– Chromatographe en phase gazeuse sur colonne capillaire avec injecteur à fente et détecteur par capture d'électrons (ionisation d'un gaz "réactif" composé de 95 parties d'argon et 5 parties de méthane à l'aide de rayons émis par $^{63}$Ni).
– Intégrateur et/ou enregistreur

Echantillons

– Les échantillons dont la teneur en MCP est supposée supérieure à 2 ppm sont dilués avec la solution à 20% de NaCl (réactif 4).
– De même, on ajoute 20% de NaCl aux condensats.

Elution

– On introduit 20 g d'échantillons dans la partie supérieure d'une petite colonne ou cartouche cylindrique verticale garnie d'un remplissage granulé.
– On laisse pénétrer l'échantillon dans le remplissage durant 15 min.
– On verse ensuite 3 fois 20 ml d'éluant (réactif 1) dans la colonne et l'on recueille environ 40 ml d'éluat en environ 20 min par l'extrémité inférieure de la colonne.
– On ajoute 1 ml de solution de trichlorobenzène (réactif 2) dans ces 40 ml d'éluat.

Chromatographie

– On utilise une colonne capillaire en silice fondue de 30 m de longueur et 0,32 mm de diamètre enduite d'une couche de 0,25 m d'épaisseur de polyéthylène-glycol présentant un degré de polymérisation de 20000.

– On porte la température de la colonne à 200°C 24 h à l'avance.

– On soumet l'échantillon à un programme de chauffage consistant à le maintenir 8 min à 120°C, puis à élever sa température à 200°C à la vitesse de 8°C/min et à le maintenir ensuite 12 min à 200°C.

– On porte la température de l'injecteur à 250°C et on règle l'ouverture de la fente à 1:10.

– On ajuste le volume d'échantillon injecté à 1,5 l (dont 1/10 seulement pénètrent dans la colonne).

– On utilise comme gaz porteur de l'hydrogène sous une pression de 1,4 bar.

– On porte la température du détecteur à 300°C 24 h à l'avance.

– On utilise comme gaz de réaction le mélange azote: méthane dans le rapport 95:5 à raison de 60 ml/min, après l'avoir fait passer sur un filtre moléculaire pour le sécher.

– Les temps de rétention sont d'environ 4,07 min pour le trichlorobenzène, d'environ 4,3 min pour les DCP et 11,9 et 13,2 min pour les 3- et 2-MCP respectivement.

## Résultats

– On compare la hauteur et/ou la surface des pics obtenus pour l'échantillon et pour les solutions mixtes standard (réactif 3).

– Pour la solution mixte standard qui se rapproche le plus de l'échantillon, on fait le rapport des hauteurs et/ou surfaces des pics correspondant au MCP et au trichlorobenzène.

– On fait le rapport correspondant pour les pics de l'échantillon.

– Le quotient des deux rapports permet d'établir la teneur en MCP de l'échantillon.

## Limites de la méthode

La limite de concentration détectable par la présente méthode est située à environ 0,05 - 0,1 ppm (0,05 - 0,1 mg de MCP par kg d'échantillon).

Le taux d'extraction du MCP atteint avec la présente méthode est supérieur à 90%.

## Exemple

On hydrolyse un tourteau d'arachide avec de l'acide chlorhydrique à 20% à 107°C durant 8 heures. On en sépare des substances humiques dites premiers insolubles par filtration. On laisse reposer l'hydrolysat pendant deux semaines, de manière à laisser déposer les seconds insolubles qu'on sépare par filtration. On obtient un hydrolysat contenant 230 ppm de MCP avec une teneur en matière sèche de 48%. On traite 793 litres (1'000 kg) de cet hydrolysat avec 793 litres de butanol à contre-courant dans une colonne pulsée de 8 mètres comportant 15 plateauxthéoriques. On travaille à un débit de 10 l/h de butanol, avec le même débit pour l'hydrolysat, à température ambiante et sous pression atmosphérique. On obtient à la sortie un hydrolysat contenant 0,3 ppm de MCP, 1-2% de butanol avec un pH de 5,9, totalement libre de DCP.

On effectue ensuite un entrainement à la vapeur de l'hydrolysat sous une pression de 0,29 bar à une température du produit de 62-64°C avec un débit de 15-20 l/h et avec 150 kg de vapeur. A la sortie de la colonne on ne détecte plus de butanol. Il faut encore concentrer le produit pour chasser l'eau introduite dans l'étape précédente. On effectue cette concentration sous vide dans un évaporateur rotatif de manière à extraire 50 kg d'eau. On ajoute finalement 4 kg d'acide chlorhydrique à 32% pour arriver à 940 kg d'hydrolysat à pH 5,45, ayant une teneur en matière sèche de 48% et contenant moins de 500 ppb de MCP.

Il reste finalement à traiter le butanol pour en éliminer les MCP, de manière à pouvoir le recycler dans une nouvelle extraction.

On traite 100 l de butanol contenant les MCP avec 5 l de $NH_3$ à 25% à 60°C. Au bout de 6 jours, il n'y a plus de MCP détectable.

L'hydrolysat final obtenu a été trouvé identique du point de vue organoleptique au produit de départ.

On dispose ainsi selon l'invention, d'un procédé simple et efficace, qui s'intègre bien dans les processus de fabrication actuels, permettant de réduire à un taux acceptable les teneurs en MCP et DCP dans l'hydrolysat.

## Revendications

1. Procédé de fabrication d'un condiment, dans lequel on hydrolyse des protéines végétales à l'acide chlorhydrique concentré, on neutralise l'hydrolysat, on en sépare des premiers insolubles, on le laisse reposer et on en sépare les seconds insolubles, caractérisé en ce que, après la séparation desdits premiers ou seconds insolubles, on soumet l'hydrolysat à une extraction liquide/liquide à contre-courant avec un solvant choisi dans le groupe constitué par l'acétate d'éthyle, le butanol-1, le butanol-2, l'isobutanol et la méthyl-ethylcétone, de façon à en éliminer les MCP et les DCP, ensuite à un entrainement à la vapeur pour en éliminer le solvant résiduel.

2. Procédé selon la revendication 1, caractérisé en ce qu'on ajoute à l'hydrolysat après l'entrainement à la vapeur de l'acide chlorhydrique pour régler le pH final entre 5,2 et 5,8.

3. Procédé selon l'une des revendications 1 et 2, caractérisé en ce qu'on travaille à un rapport en volume hydrolysat/solvant compris entre 1:0,5 et 1:2.

4. Procédé selon l'une des revendications 1 à 3, caractérisé en ce qu'on effectue l'extraction à contre-courant à une température comprise entre 15 et 30°C et à la pression atmosphérique.

5. Procédé selon la revendication 1, caractérisé en ce qu'on effectue l'extraction à contre-courant avec du butanol-1 avec un rapport en volume hydrolysat/solvant égal à 1:1.

6. Procédé selon l'une des revendications 1 à 5, caractérisé en ce qu'on purifie le solvant utilisé par distillation, par entrainement à la vapeur ou par amminolyse et on le réutilise pour une nouvelle extraction.

## Patentansprüche

1. Verfahren zur Herstellung eines Würzmittels, in welchem man pflanzliche Proteine mit konzentrierter Chlorwasserstoffsäure hydrolysiert, das Hydrolysat neutralisiert, dann die ersten unlöslichen Rückstände abtrennt, das Hydrolysat ruhen läßt und davon die zweiten unlöslichen Rückstande abtrennt, dadurch gekennzeichnet, daß man das Hydrolysat nach der Abtrennung der gennanten ersten unlöslichen Rückstände oder der gennanten zweiten unlöslichen Rückstände einer Flüssig/Flüssig-Extraktion im Gegenstrom mit einem Lösungsmittel unterwirft, welches aus einer Gruppe ausgewählt ist, die aus Ethylacetat, 1-Butanol, 2-Butanol, Isobutanol und Methylethylketon besteht, derart, daß dadurch die Monochlorpropandiole (MCP) und die Dichlorpropandiole (DCP) aus dem Hydrolysat entfernt werden, und daß man das Hydrolysat anschließend einem Abtreiben mit Wasserdampf unterwirft, um daraus restliche Lösungsmittel zu entfernen.

2. Verfahren nach Anspruch 1, dadurch gekennzeichnet, daß man zu dem Hydrolysat nach dem Abtreiben mit Wasserdampf Chlorwasserstoffsäure hinzufügt, um den End-pH-Wert auf einen Wert zwischen 5,2 und 5,8 einzustellen.

3. Verfahren nach Anspruch 1 oder 2, dadurch gekennzeichnet, daß man bei einem zwischen 1:0,5 und 1:2 liegenden Volumenverhältnis von Hydrolysat/Lösungsmittel arbeitet.

4. Verfahren nach einem der Ansprüche 1 bis 3, dadurch gekennzeichnet, daß man die Gegenstromextraktion bei einer zwischen 15 und 30° C liegenden Temperatur und bei Atmosphärendruck durchführt.

5. Verfahren nach Anspruch 1, dadurch gekennzeichnet, daß man die Gegenstromextraktion mit 1-Butanol und bei einem Volumenverhältnis von Hydrolysat/Lösungsmittel von 1:1 durchführt.

6. Verfahren nach einem der Ansprüche 1 bis 5, dadurch gekennzeichnet, daß man das benützte Lösungsmittel durch Destillation, durch Abtreiben mit Wasserdampf oder durch Amminolyse reinigt und daß man dasselbe für eine neuerliche Extraktion wiederverwendet.

## Claims

1. A process for the production of a seasoning in which vegetable proteins are hydrolyzed with concentrated hydrochloric acid, the hydrolyzate is neutralized and first insolubles and, after standing, second insolubles are separated therefrom, characterized in that, after separation of the first or second insolubles, the hydrolyzate is subjected to countercurrent liquid/liquid extraction with a solvent selected from the group consisting of ethyl acetate, 1-butanol, 2-butanol, isobutanol and methyl ethyl ketone to eliminate the MCPS and the DCPS and then to stripping with steam to eliminate the residual solvent.

2. A process as claimed in claim 1, characterized in that hydrochloric acid is added to the hydrolyzate after stripping with steam to adjust the final pH to between 5.2 and 5.8.

3. A process as claimed in claim 1 or 2, characterized in that a ratio by volume of hydrolyzate to solvent of from 1:0.5 to 1:2 is used.

4. A process as claimed in any of claims 1 to 3, characterized in that the countercurrent extraction is carried out at a temperature of 15 to 30°C under atmospheric pressure.

5. A process as claimed in claim 1, characterized in that the countercurrent extraction is carried out with 1-butanol using a ratio by volume of hydrolyzate to solvent of 1:1.

6. A process as claimed in any of claims 1 to 5, characterized in that the solvent used is purified by distillation, by stripping with steam or by amminolysis and is reused for another extraction.